# EUROPEAN PATENT APPLICATION

(11) **EP 4 256 995 A1**
(43) Date of publication of application: **11.10.2023**
(21) Application number: 20964320.4
(22) Date of filing: 04.12.2020
(51) Int. Cl.: A41D 19/04

(54) **PERSON WRAPPING DEVICE**

(71) Applicant: Kayama Co., Ltd., Tokyo, 150-0032 (JP)
(72) Inventor: KANAMORI Keishiro, Tokyo 150-0032 (JP)
(74) Representative: Plougmann Vingtoft a/s
(86) International application number: PCT/JP2020/045275
(87) International publication number: WO 2022/118469

(57) **Abstract**

Provided is a human wrapping device making it possible to perform welding partially without interruption along the contour of a part of a human body. The human body wrapping device for causing a wrap film to be adhered to both hands of a human body as a targeted portion, is provided with a bonding unit 222 for bonding the first film and the second film along a contour of the target portion in a state where the target portion is disposed between the first film and the second film; a melt-cutting heat wire 2201 and a welding heat wire 2202 for heating the first film and the second film in a state where the first film and the second film are bonded to each other in the bonding unit 222; and a heating controller for controlling the melt-cutting heat wire 2201 and the welding heat wire 2202, in which the bonding unit 222 is divided into a plurality of linear portions, the melt-cutting heat wire 2201 and the welding heat wire 2202 include a plurality of heat wires provided for each of the plurality of linear portions, and the heating controller individually controls a heating temperature for each of the melt-cutting heat wire 2201 and the welding heat wire 2202.

## Description

### Technical Field

The present invention relates to a human body wrapping device for causing a film to adhere to, for example, a hand as a part of a human body.

### Background Art

For example, as a device in the related art for causing a film to adhere to a hand, there has been proposed a device in which a hand is sandwiched between two films, and portions of the films along a contour of the hand are welded and cut, thereby wrapping the hand in a glove shape (for example, see Patent Literature 1).

### Citation List

### Patent Literature

Patent Literature 1: Japanese Patent No. 6411004

### Summary of Invention

### Technical Problem

However, in the above-mentioned device in the related art, since the contour of the hand has a complicated curved shape, there is a disadvantage that in heat wires disposed along the contour of the hand, it is difficult to control a temperature to be suitable for welding as a whole, a degree of welding between the two films tends to vary, and it is difficult to perform the welding over the entire contour of the hand without partial disconnection.

The present invention has been made in view of the above points, and an object of the present invention is to provide a human body wrapping device capable of performing welding along a contour of a part of a human body without partial disconnection.

### Solution to Problem

(1) A human body wrapping device for causing a first film and a second film to adhere to a part of a human body as a target portion, including: a bonding unit for bonding the first film and the second film along a contour of the target portion in a state where the target portion is disposed between the first film and the second film; a heating unit for heating the first film and the second film in a state where the first film and the second film are bonded to each other in the bonding unit; and a heating controller for controlling the heating unit. In the human body wrapping device, the bonding unit is divided into a plurality of linear portions, the heating unit includes a plurality of heat wires provided for each of the plurality of linear portions, and the heating controller individually controls a heating temperature for each of the plurality of heat wires.

According to the invention of (1), the human body wrapping device includes: the bonding unit for bonding the first film and the second film along the contour of the target portion in the state where the target portion is disposed between the first film and the second film; the heating unit for heating the first film and the second film in the state where the first film and the second film are bonded to each other in the bonding unit; and the heating controller for controlling the heating unit. The bonding unit is divided into the plurality of linear portions. The heating unit includes the plurality of heat wires provided for each of the plurality of linear portions. The heating controller individually controls the heating temperature for each of the plurality of heat wires.

According to the invention of (1), since the bonding unit along the contour of the target portion is divided into the plurality of linear portions, and the plurality of heat wires provided for each of the linear portions are individually controlled to have appropriate heating temperatures, even when the contour of the target portion has a complicated shape, the two films can be appropriately and sufficiently welded to each other for each linear portion along the contour, and thus can be welded without partial disconnection.

(2) The human body wrapping device according to (1), in which the plurality of heat wires include a melt-cutting heat wire for melt-cutting unnecessary portions of the first film and the second film by heating, and a welding heat wire for welding the first film and the second film to each other by heating.

According to the invention of (2), it is possible to individually form a portion where the two films are melt-cut together while being welded by heating the melt-cutting heat wire and a portion where the two films are welded together by heating the welding heat wire.

(3) The human body wrapping device according to (2), in which the welding heat wire is provided in a linear portion where tension of the first film and the second film is relatively high among the plurality of linear portions.

According to the invention of (3), it is possible to provide a welding margin by heating the welding heat wire on a part of the linear portions along the contour of the target portion where the degree of welding tends to be weak because the tension of the two films is partially and relatively high.

(4) The human body wrapping device according to (2) or (3), in which the heating controller heats the welding heat wire, and heats the melt-cutting heat wire after a predetermined cooling time.

According to the invention of (4), the welding can be reliably performed by cooling a part of the linear portions after heating the welding heat wire, and thereafter, the unnecessary portions of the two films can be reliably melt-cut by heating the melt-cutting heat wire.

### Advantageous Effects of Invention

According to the present invention, it is possible to provide a human body wrapping device capable of performing welding along a contour of a part of a human body without partial disconnection.

### Brief Description of Drawings

[Figure 1] Figure 1 is an overall perspective view illustrating a human body wrapping device according to one embodiment of the present invention from an upper side.
[Figure 2] Figure 2 is an overall perspective view illustrating the human body wrapping device according to one embodiment of the present invention from a lower side.
[Figure 3] Figure 3 is a front view illustrating the human body wrapping device according to one embodiment of the present invention.
[Figure 4] Figure 4 is a top view illustrating the human body wrapping device according to one embodiment of the present invention.
[Figure 5] Figure 5 is a bottom view illustrating the human body wrapping device according to one embodiment of the present invention.
[Figure 6] Figure 6 is a left side view illustrating the human body wrapping device according to one embodiment of the present invention.
[Figure 7] Figure 7 is a right view illustrating the human body wrapping device according to one embodiment of the present invention.
[Figure 8] Figure 8 is a perspective view illustrating a stationary unit of the human body wrapping device.
[Figure 9] Figure 9 is a perspective view illustrating a frame-shaped portion of the stationary unit.
[Figure 10] Figure 10 is a perspective view illustrating an upper mount of the stationary unit.
[Figure 11] Figure 11 is a top view illustrating the frame-shaped portion of the stationary unit.
[Figure 12] Figure 12 is a perspective view illustrating a pressure welding unit of the human body wrapping device.
[Figure 13] Figure 13 is a perspective view illustrating a frame-shaped portion of the pressure welding unit.
[Figure 14] Figure 14 is a bottom view illustrating the frame-shaped portion of the pressure welding unit.
[Figure 15] Figure 15 is an exploded perspective view illustrating the frame-shaped portion of the pressure welding unit.
[Figure 16] Figure 16 is a top view illustrating a wiring board of the frame-shaped portion of the pressure welding unit.
[Figure 17] Figure 17 is a top view illustrating a partially enlarged wiring board in the frame-shaped portion of the pressure welding unit.
[Figure 18] Figure 18 is a block diagram illustrating a heating control unit of the wiring board in the frame-shaped portion of the pressure welding unit.
[Figure 19] Figure 19 is a flowchart illustrating a heat wire heating process by a control unit.
[Figure 20] Figure 20 is a perspective view illustrating an up and down drive mechanism of the human body wrapping device.
[Figure 21] Figure 21 is a front view illustrating a human body wrapping device according to another embodiment of the present invention.

### Description of Embodiments

Hereinafter, the embodiments of the invention are described based on the drawings. In the following description, the same reference numeral is used to represent identical or similar components, and the explanation of such components is omitted or simplified. Some components are omitted from the drawings in order to show a configuration of essential components in a clear and concise manner.

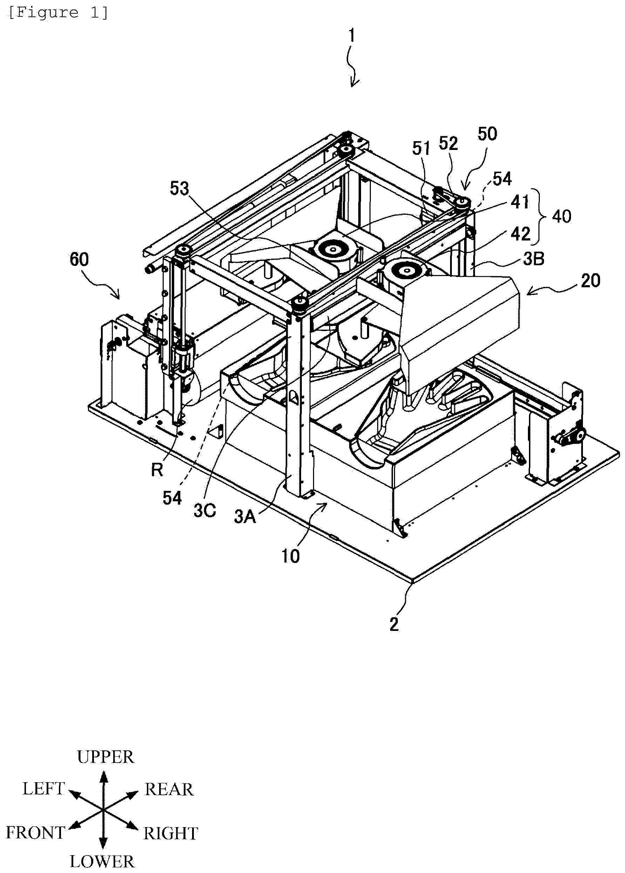

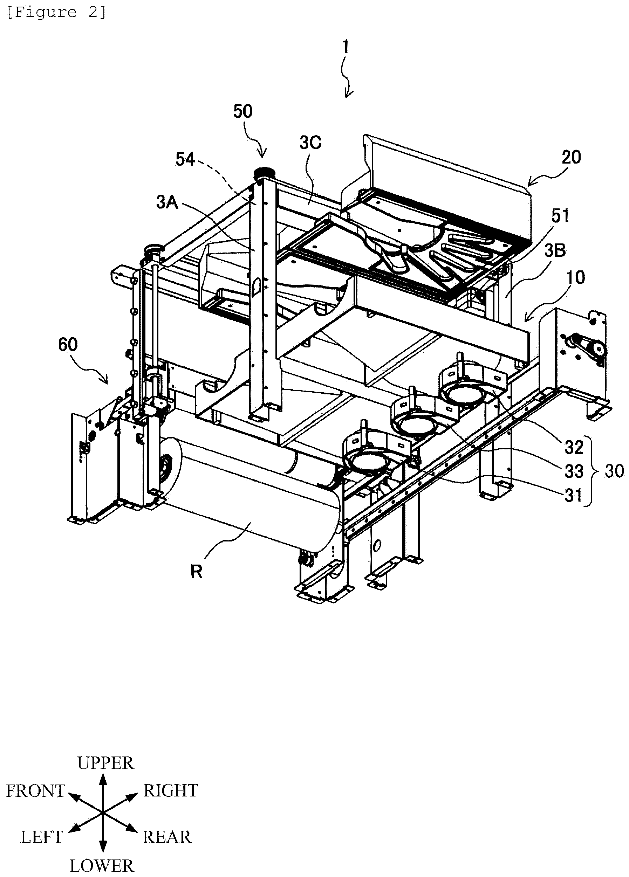

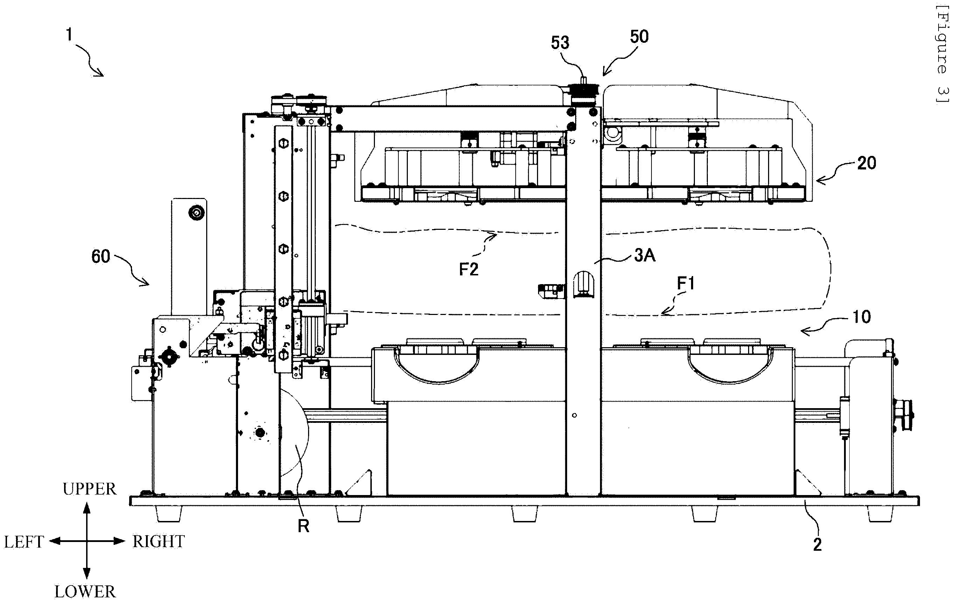

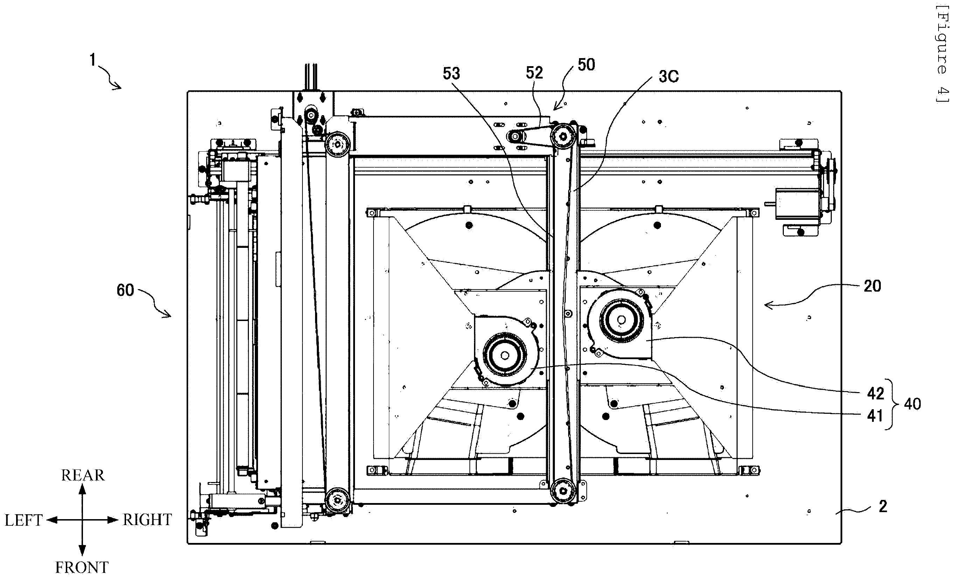

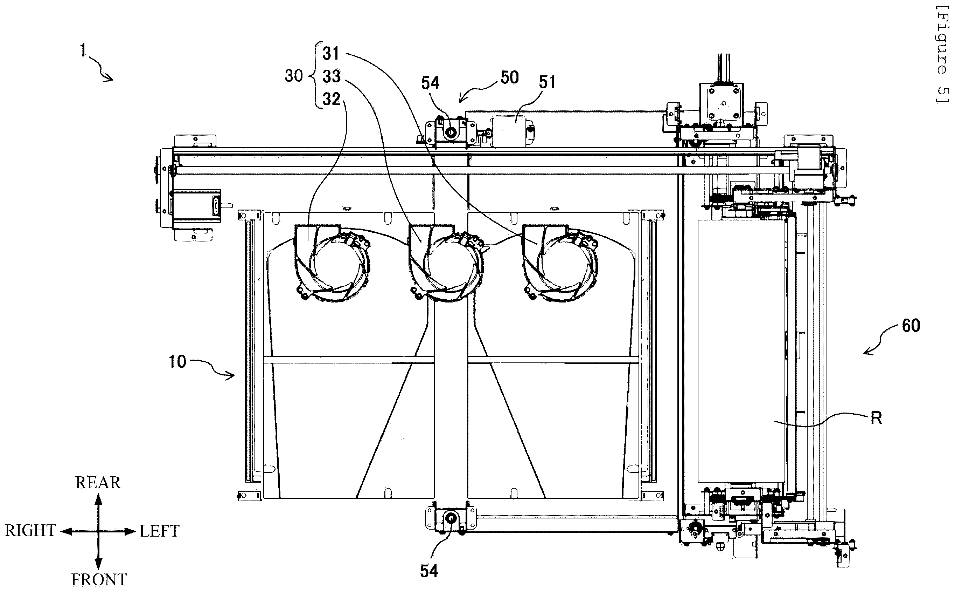

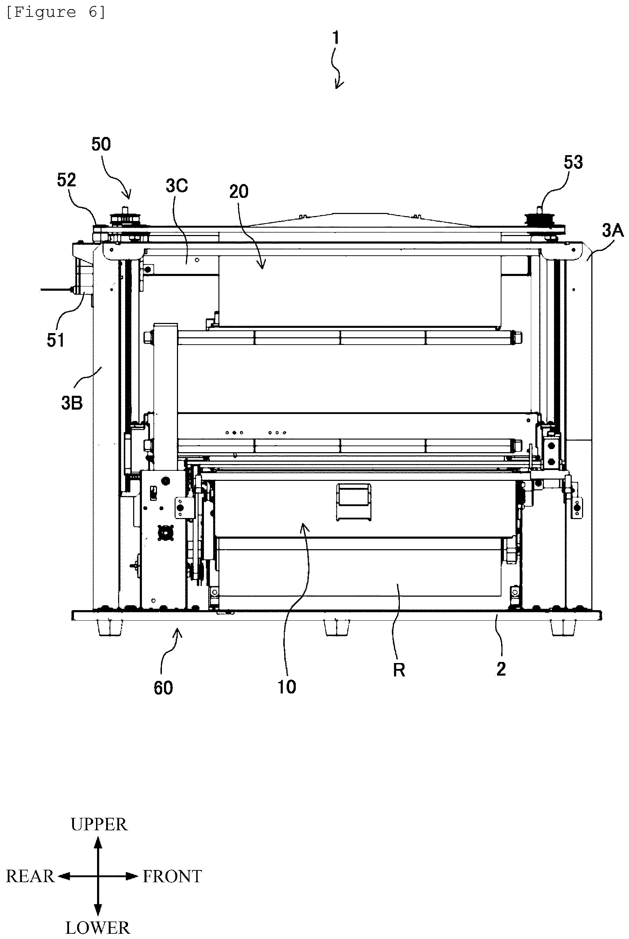

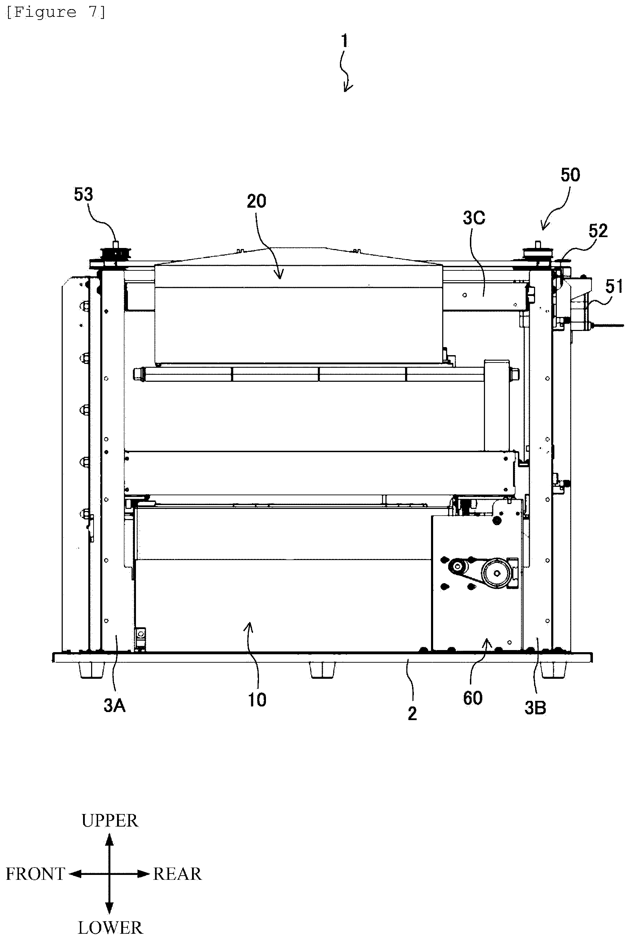

Figures 1 and 2 are overall perspective views illustrating a human body wrapping device according to one embodiment of the present invention, Figure 3 is a front view illustrating the human body wrapping device, Figure 4 is a top view illustrating the human body wrapping device, Figure 5 is a bottom view illustrating the human body wrapping device, Figure 6 is a left side view illustrating the human body wrapping device, and Figure 7 is a right view illustrating the human body wrapping device.

A human body wrapping device 1 of the present embodiment is a device bringing so-called wrap films into close contact with respect to an entire outer surface of each of both hands as a part of a human body. As illustrated in Figures 1 to 7, the human body wrapping device 1 includes a stationary unit 10, a pressure welding unit 20, an up and down drive mechanism 50, and a film conveying mechanism 60 as main components. The stationary unit 10 is directly fixed to a base plate 2, and is provided to station both hands. The pressure welding unit 20 is supported so as to be movable up and down via a pair of support frames 3A and 3B and a movable beam 3C assembled to the base plate 2, and is provided to perform press welding on a pair of wrap films against each other in a state where both hands are sandwiched between the wrap films stretched up and down. The up and down drive mechanism 50 is provided to move the movable beam 3C supported by the pair of support frames 3A and 3B in an up-down direction. The film conveying mechanism 60 is provided to convey the wrap film to a lower side (palm side of hand) and an upper side (back side of hand) of both hands while pulling out the wrap film from a roll R around which the wrap film is wound plural times.

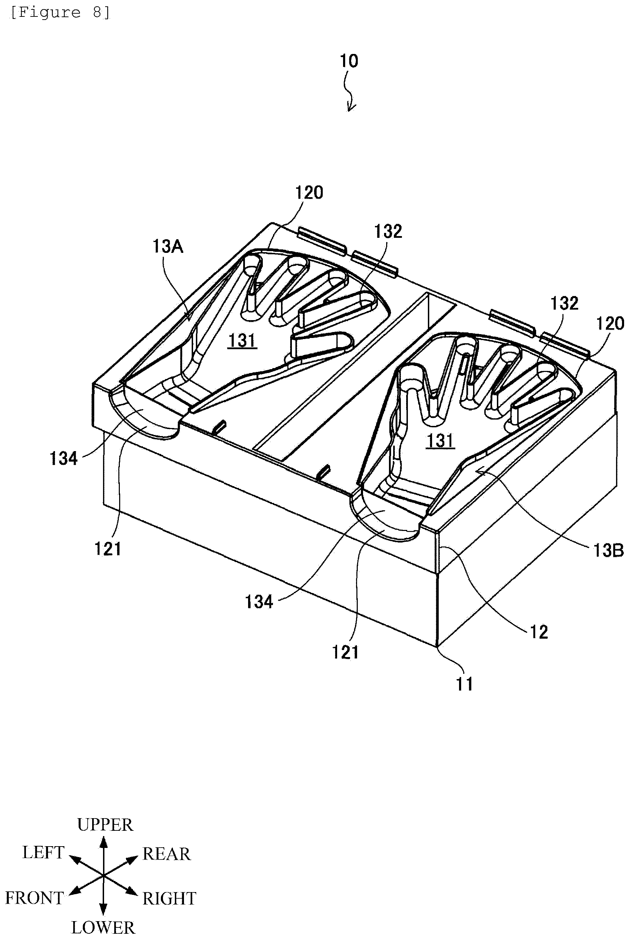

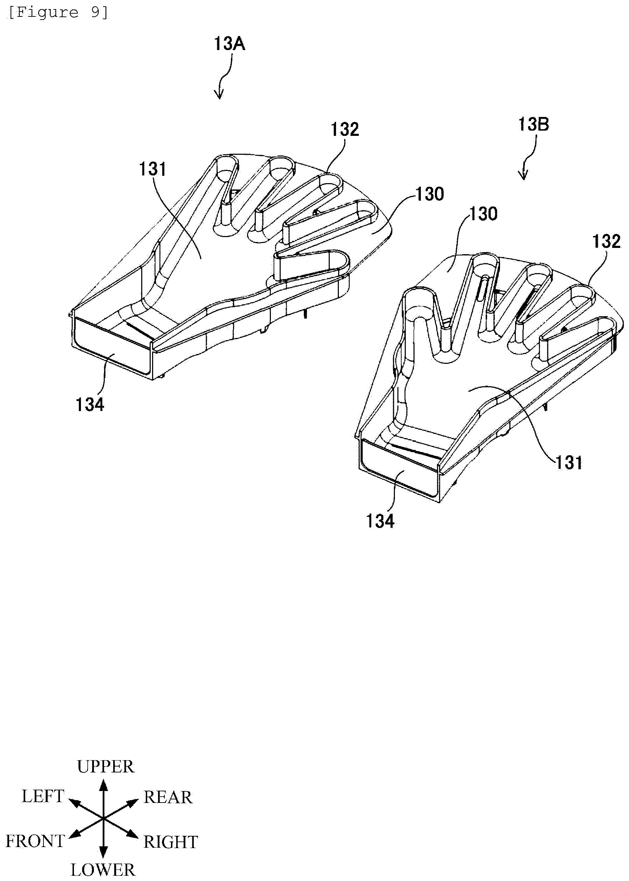

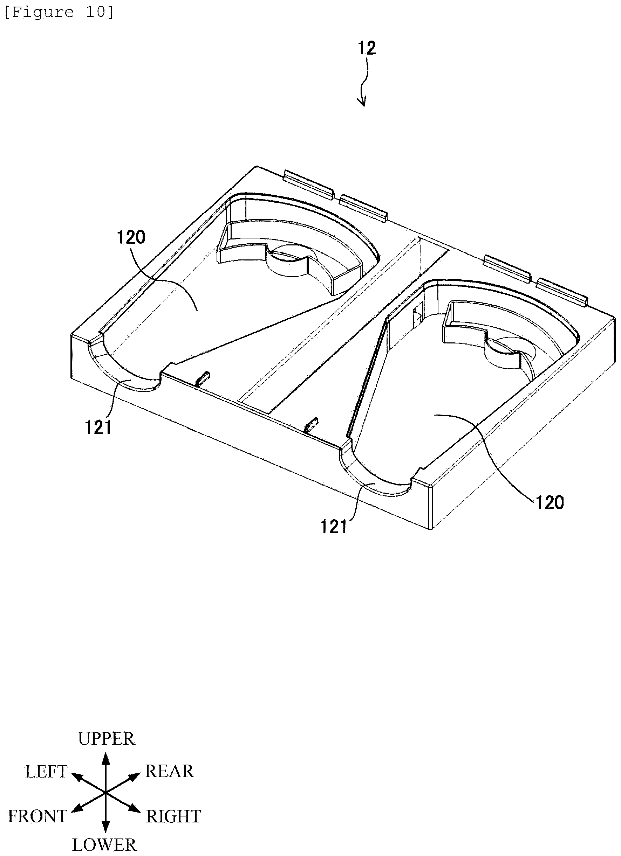

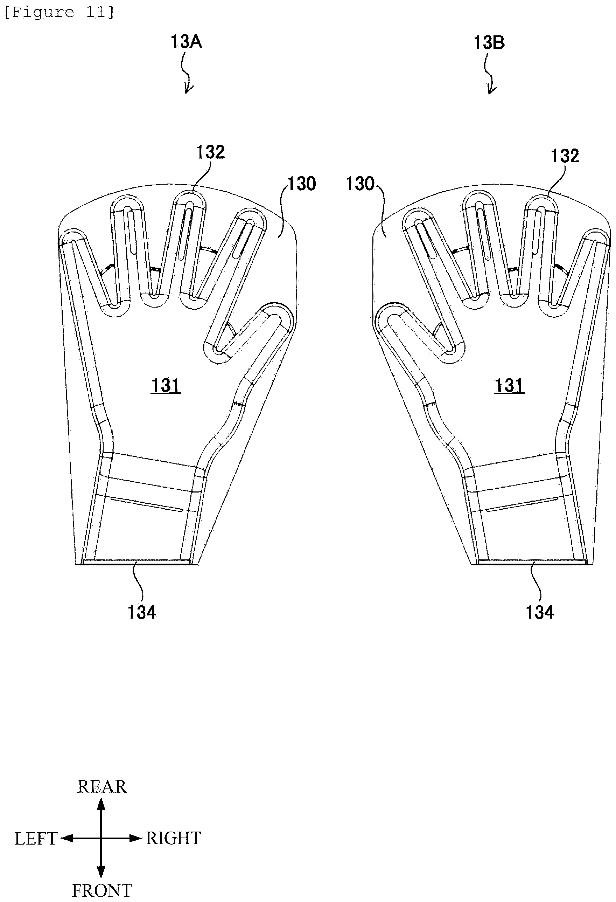

Figures 8 to 11 are views illustrating a whole or each part of the stationary unit 10. As illustrated in Figure 8, the stationary unit 10 includes a case 11, an upper mount 12, and a pair of frame-shaped portions 13A and 13B. The case 11 is provided with three suction blowers 31 to 33 disposed thereinside, and is fixed to the base plate 2 (not illustrated). The upper mount 12 is disposed so as to close an upper opening of the case 11. The frame-shaped portions 13A and 13B are disposed in accommodation recesses 120 (see Figure 10) of the upper mount 12.

As illustrated in Figures 8 and 10, the upper mount 12 has a pair of accommodation recesses 120 and cutout end portions 121 provided in the respective accommodation recesses 120.

The pair of accommodation recesses 120 are arranged side by side in a left-right direction, and the respective accommodation recesses 120 are formed so as to follow outer shapes of the frame-shaped portions 13A and 13B to be described later. At front ends of the accommodation recesses 120, semicircular cutout end portions 121 are formed so as to follow wrists when hands are inserted into the frame-shaped portions 13A and 13B.

As illustrated in Figures 8, 9, 11, and 12, each of the frame-shaped portions 13A and 13B includes a plate portion 130, a hand shape portion 131, a contour portion 132, and a tongue piece 134. The frame-shaped portions 13A and 13B are independent of each other, and the frame-shaped portion 13A is disposed in the accommodation recess 120 on a left side of the upper mount 12 corresponding to a left hand, and the frame-shaped portion 13B is disposed in the accommodation recess 120 on a right side of the upper mount 12 corresponding to a right hand.

The plate portion 130 has an outer peripheral shape in plan view that matches an inner peripheral shape in plan view of the accommodation recess 120, and is formed so as to extend outward from an outer periphery of the hand shape portion 131. The hand shape portion 131 is a portion on which the left hand or the right hand is placed in a state where a wrap film (lower-side film F1 illustrated in Figure 3) is sandwiched therebetween with the palm of hand facing downward, and is formed so as to correspond to a shape from five fingers to the vicinity of the wrist. The contour portion 132 is formed so as to form a convex erected wall along an entire outer periphery of the hand shape portion 131. The tongue piece 134 is, for example, a silicone resin that is elastically deformable, and is provided so as to close a gap with the wrist on an end portion into which the wrist is inserted in the hand shape portion 131.

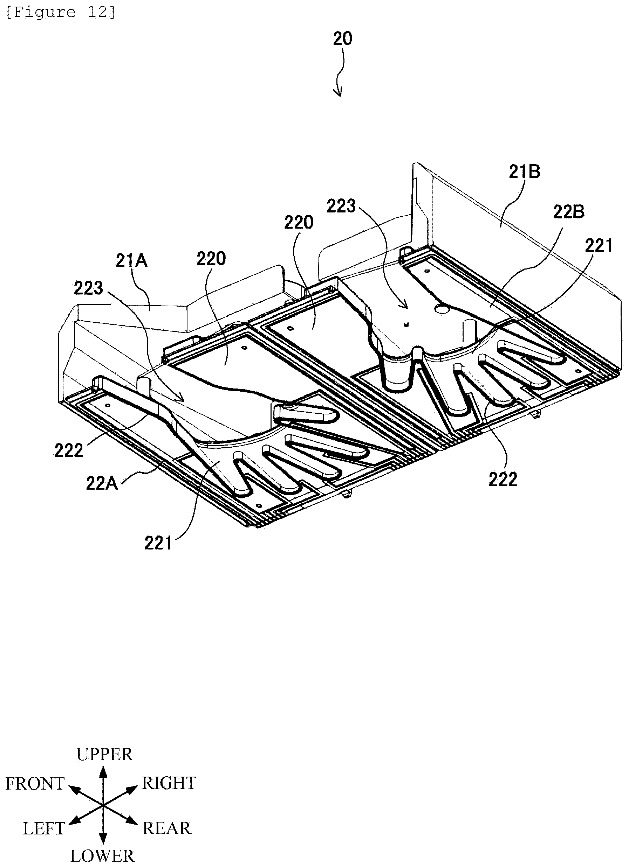

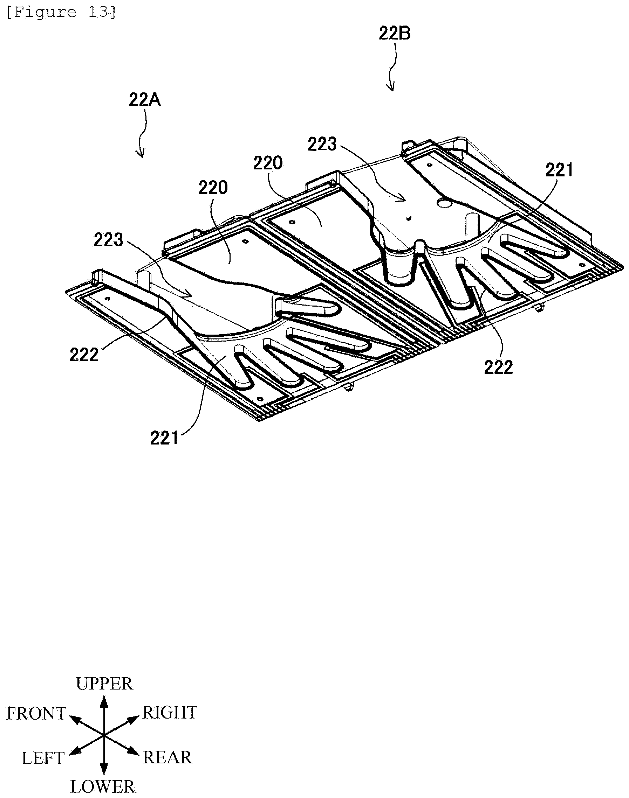

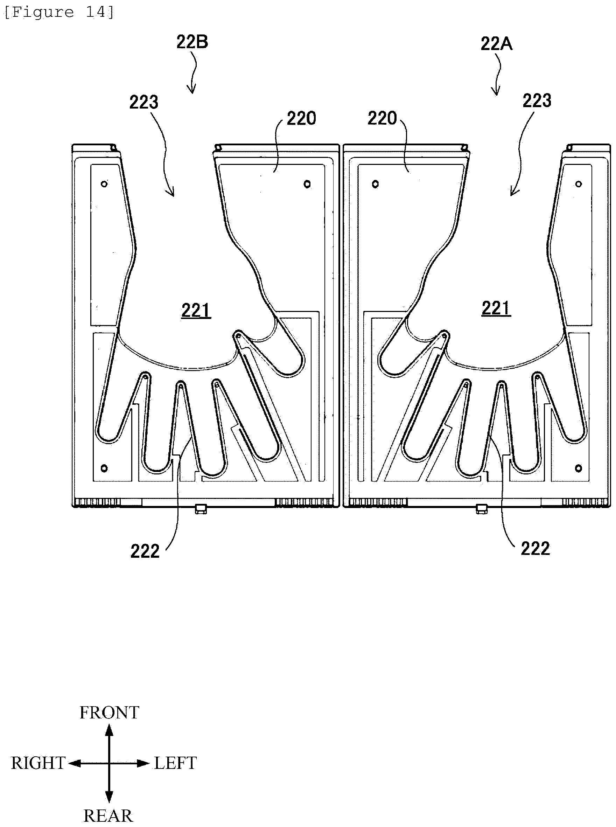

Figures 12 to 21 are views illustrating a whole or each part of the pressure welding unit 20. As illustrated in Figure 12, the pressure welding unit 20 includes a pair of base portions 21A and 21B and a pair of frame-shaped portions 22A and 22B. The frame-shaped portions 22A and 22B are fixed to lower portions of the base portions 21A and 21B, respectively. The base portions 21A and 21B are fixed to both left and right sides of the movable beam 3C (see Figure 1 and the like), respectively. Such a pressure welding unit 20 is moved in the up-down direction integrally with the movable beam 3C by the up and down drive mechanism 50 (see Figure 1 and the like).

As illustrated in Figures 12 to 15, each of the frame-shaped portions 22A and 22B includes a plane portion 220, a hand shape portion 221, a bonding portion 222, and an opening 223. The frame-shaped portions 22A and 22B are independent of each other, and the frame-shaped portion 22A is disposed on the left side of the movable beam 3C (see Figure 1 and the like) corresponding to the left hand, and the frame-shaped portion 22B is disposed on the right side of the movable beam 3C corresponding to the right hand.

The plane portion 220 has an overall shape in plan view of about half of the upper mount 12 of the stationary unit 10, and is formed in a rectangular shape so as to extend outward from an outer periphery of the hand shape portion 221. The hand shape portion 221 is a portion where the left hand or the right hand is sandwiched between the hand portion 221 and the stationary unit 10 in a state where the back of hand facing upward and the wrap film (upper-side film F2 illustrated in Figure 3) is sandwiched therebetween, and is formed to correspond to a shape from the five fingers to the vicinity of the wrist. In the hand shape portion 221, a portion substantially corresponding to the five fingers is in a state of being closed vertically by a plane, and a portion substantially corresponding to the vicinity of the wrist from the back of hand is formed so as to penetrate vertically by the opening 223. The bonding portion 222 forms a convex erected wall along an entire outer periphery of the hand shape portion 221, and is formed so as to match the contour portion 132 in the frame-shaped portions 13A and 13B of the stationary unit 10. The opening 223 is formed so as to correspond to the hand shape portion 131.

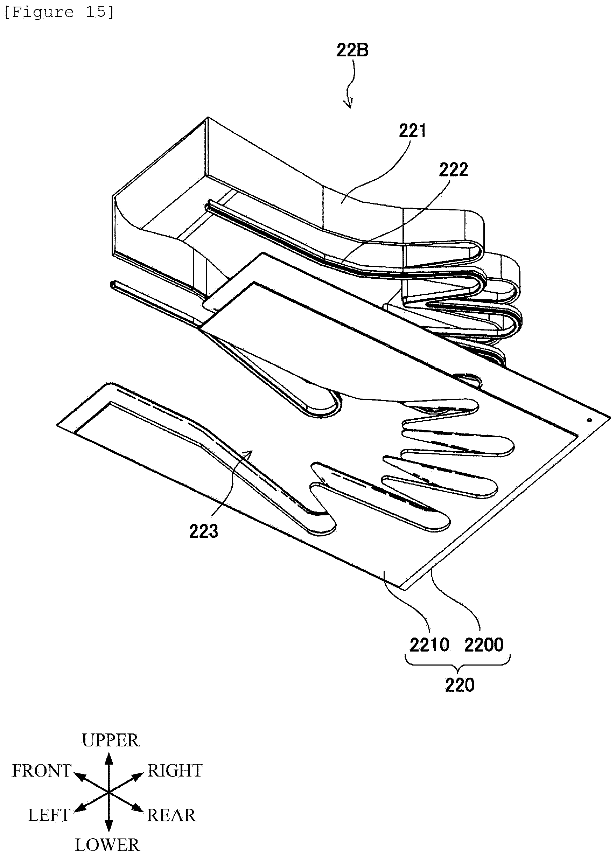

Next, one frame-shaped portion 22B will be described in detail with reference to Figures 15 to 17. Since the other frame-shaped portion 22A has the same configuration as that of the frame-shaped portion 22B, a detailed illustration thereof is omitted.

As illustrated in Figure 15, the plane portion 220 is formed by superimposing a glass panel 2210 on a lower surface of a wiring board 2200. In the wiring board 2200 and the glass panel 2210, a hand-shaped opening 223 is formed along the contour of the hand. On the wiring board 2200, later-described melt-cutting heat wires 2201 and welding heat wires 2202 for performing welding or melt-cutting by linearly heating the wrap film along the contour of the hand are disposed. The bonding portion 222 is provided at an entire lower end of the hand shape portion 221. The bonding portion 222 is formed linearly along the contour of the hand, and is covered with the wiring board 2200 and the glass panel 2210 along a periphery of the opening 223. Such a bonding portion 222 applies a sufficient pressing force to a bonded portion of the lower-side film F1 and the upper-side film F2 via the wiring board 2200 and the glass panel 2210 between the bonding portion 222 and the contour portion 132 in the frame-shaped portion 13A or 13B of the stationary unit 10. As a result, the lower-side film F1 and the upper-side film F2 are brought into close contact with each other linearly along the contour of the hand. In addition, since the glass panel 2210 is interposed between the wiring board 2200 and the hand, safety is ensured without causing an electric shock to the hand even when the melt-cutting heat wire 2201 and the welding heat wire 2202 to be described later are brought into an energized state.

A surface of the hand shape portion 221 and a surface of the bonding portion 222 are applied with a fluorine glass coating such that the wrap films are less likely to adhere thereto. As a result, the upper-side film F2 disposed between the back of hand and the hand shape portion 221 is more likely to be brought into close contact with the hand than the hand shape portion 221, and the upper-side film F2 adhered to the hand is less likely to be peeled off from the hand due to the unnecessary portion being separated. Surfaces of the frame-shaped portions 13A and 13B of the stationary unit 10 are also applied with a fluorine glass coating, and the lower-side film F1 adhered to the hand is less likely to be peeled off from the hand.

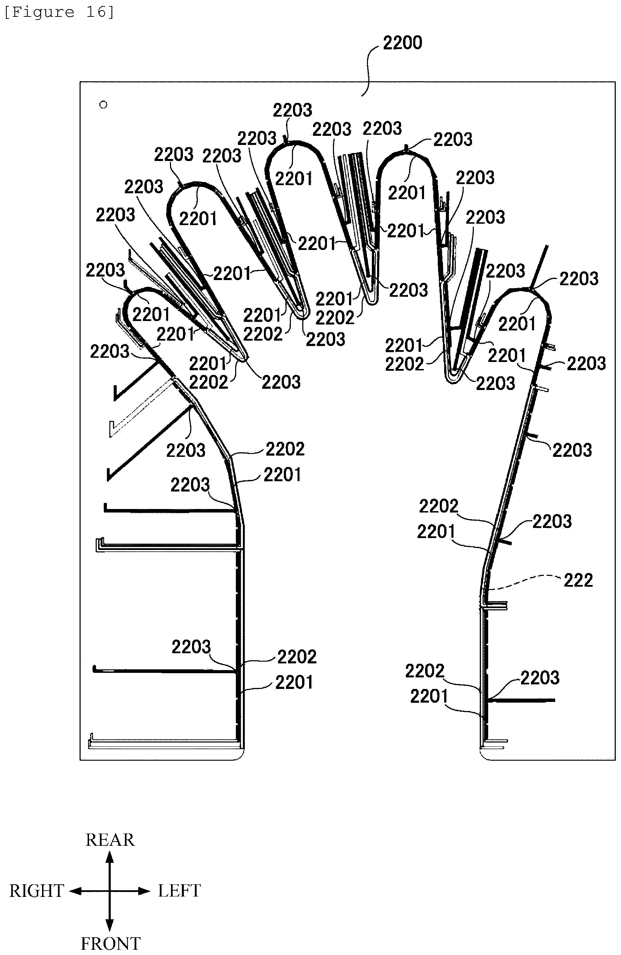

As illustrated in Figure 16, the wiring board 2200 is provided with, for example, twenty-three melt-cutting heat wires 2201, eight welding heat wires 2202, and twenty-six thermistors 2203 along the contour of the hand in parallel with the bonding portion 222 located at the periphery of the opening 223. The melt-cutting heat wire 2201 and the welding heat wire 2202 are formed of, for example, a silver-palladium film, have a smaller heat capacity than the hand shape portion 221 and the bonding portion 222 that are made of stainless steel, and function as heating resistors having excellent heat transfer rate and thermal conductivity. In the present embodiment, an example in which the melt-cutting heat wire 2201 and the welding heat wire 2202 are separately provided is described, but the present invention is not limited thereto, and a single heat wire may be used without separating the purpose of melt-cutting and welding.

The melt-cutting heat wire 2201 is for cutting off an unnecessary portion on an outer side of the hand by melt-cutting while welding a portion where the lower-side film F1 and the upper-side film F2 are bonded along the bonding portion 222, and is provided so as to divide an entire circumference of the bonding portion 222 into twenty-three sections. The welding heat wire 2202 is for performing only welding on the portion where the lower-side film F1 and the upper-side film F2 are bonded along the bonding portion 222. The melt-cutting heat wire 2201 is divided in a range in which a temperature rises at the same pace and drops at the same pace when a current is turned on and off over the entire circumference of the bonding portion 222. For example, the melt-cutting heat wire 2201 is disposed along the bonding portion 222 having a shape on an outer periphery of the hand illustrated in the example of the present embodiment, and at a fingertip portion, a finger middle portion, and a finger root portion, rates of rise and fall of temperature are different when the current is turned on and off due to a difference in distance from another melt-cutting heat wire 2201. Therefore, the melt-cutting heat wire 2201 is disposed as being divided into the fingertip portion, the finger middle portion, and the finger root portion. In addition, in the melt-cutting heat wire 2201, rates of rise and fall of temperature are different at a straight-line shaped portion and a curved portion when the current is turned on and off. Therefore, the melt-cutting heat wire 2201 is disposed as being divided into the straight-line shaped portion and the curved portion.

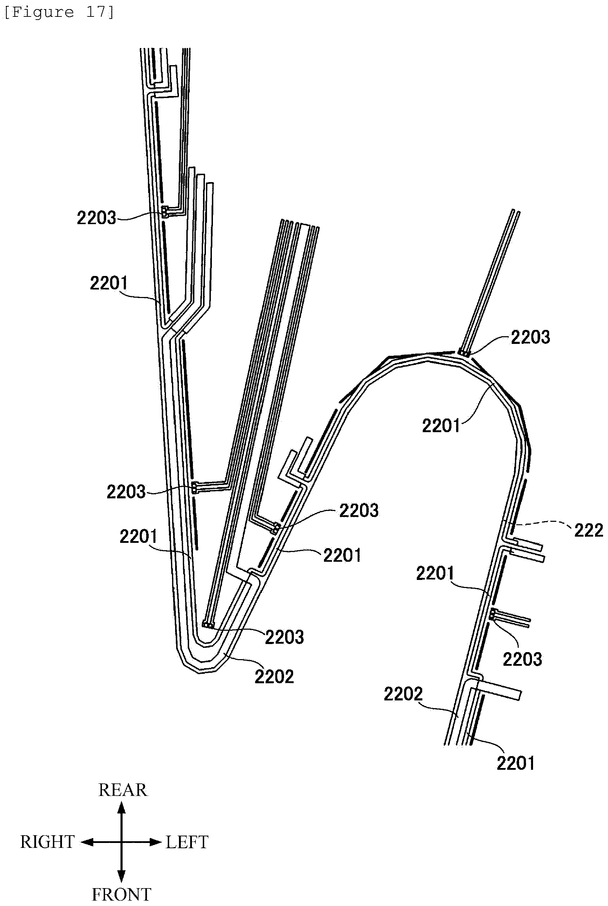

The welding heat wire 2202 is provided at a portion between fingers or a portion close to the wrist where the tension of the lower-side film F1 and the upper-side film F2 becomes relatively large due to the complicated contour of the hand, and is formed at a position closer to the hand than the melt-cutting heat wire 2201 while being adjacent to the melt-cutting heat wire 2201 (see Figure 17). As a result, a welded portion (welding margin) of the lower-side film F1 and the upper-side film F2 is formed slightly inside an outer edge from which the unnecessary portion is melt-cut, and the wrap film adhered to the hand is hardly peeled off or separated by a movement of the finger or the like. In a case where the welding heat wire 2202 is omitted and welding is also performed with the melt-cutting heat wire 2201, a welding margin may be formed by thickening the heat wire in the portion where the tension of the lower-side film F1 and the upper-side film F2 becomes relatively large, changing a material, or changing a heating time.

The thermistor 2203 is provided at a substantially intermediate position of each portion obtained by dividing the entire circumference of the bonding portion 222 into twenty-six sections while being adjacent to the melt-cutting heat wire 2201 or the welding heat wire 2202, and has a function of detecting a heating temperature of the melt-cutting heat wire 2201 or the welding heat wire 2202 according to a change in resistance value. The melt-cutting heat wire 2201, the welding heat wire 2202, and the thermistor 2203 are individually controlled by a heating control unit 90 to be described later.

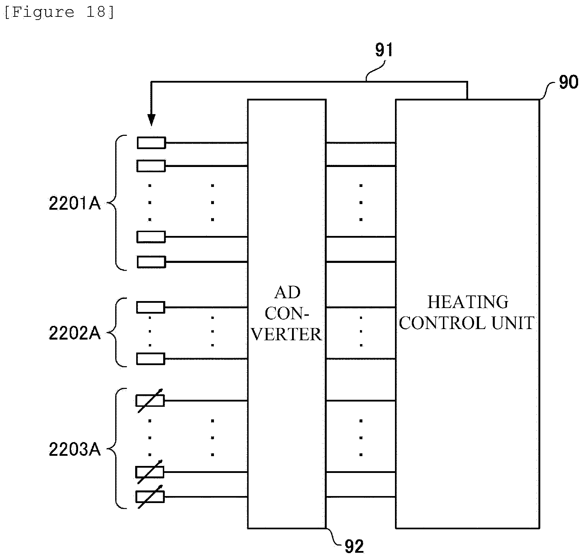

As illustrated in Figure 18, the heating control unit 90 is implemented by a so-called microcomputer, and is connected to a plurality of melt-cutting heating units 2201A and a plurality of welding heating units 2202A via an enable wire 91, and is connected to a plurality of melt-cutting heating units 2201A, a plurality of welding heating units 2202A, and a plurality of heating temperature detection units 2203A via an AD converter 92. The melt-cutting heating unit 2201A is a generic term of functional parts including, in addition to the melt-cutting heat wire 2201, a metal-oxide-semiconductor field effect transistor (MOSFET), a differential amplifier, a switching element, and the like (not illustrated) that are connected to the melt-cutting heat wire 2201. The welding heating unit 2202A is a generic term of functional parts including, in addition to the welding heat wire 2202, a MOSFET, a differential amplifier, a switching element, and the like (not illustrated) that are connected to the welding heat wire 2202. The heating temperature detection unit 2203A is a generic term of functional parts including, in addition to the thermistor 2203, an input/output full-swing operational amplifier, a rectifier diode, and the like (not illustrated) that are connected to the thermistor 2203. In Figure 18, enable wires 91 are collectively illustrated for convenience, but the enable wires 91 are individually connected to each of the plurality of melt-cutting heating units 2201A and the plurality of welding heating units 2202A.

The heating control unit 90 individually brings the plurality of melt-cutting heating units 2201A into an energized state via the enable wire 91 to individually heat the plurality of melt-cutting heat wires 2201. In addition, the heating control unit 90 individually brings the plurality of welding heating units 2202A into an energized state via the enable wire 91 to individually heat the plurality of welding heat wires 2202. The heating control unit 90 detects a current value at which the melt-cutting heat wire 2201 and the welding heat wire 2202 are energized from the plurality of melt-cutting heating units 2201A and the plurality of welding heating units 2202A via the AD converter 92. In addition, the heating control unit 90 detects the heating temperature by detecting a change in resistance value of the thermistor 2203 from the plurality of heating temperature detection units 2203A via the AD converter 92. According to such a heating control unit 90, it is possible to individually control the heating temperature and the heating time of the plurality of melt-cutting heat wires 2201 and the plurality of welding heat wires 2202 to be proper and appropriate.

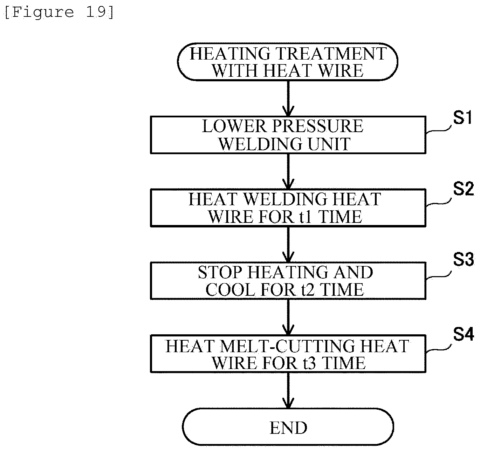

Specifically, referring to a flowchart in Figure 19, after the pressure welding unit 20 is lowered (S1), the heating control unit 90 brings the plurality of welding heating units 2202A into an energized state, thereby heating the plurality of welding heat wires 2202 by setting a welding heating time thereof as a t1 time (S2). The welding heating time t1 is, for example, about 3 seconds to 5 seconds. An appropriate heating temperature of the welding heat wire 2202 is, for example, about 100°C to 130°C. In this case, the heating control unit 90 detects a heating temperature from the heating temperature detection unit 2203A including the thermistor 2203 adjacent to the welding heat wire 2202, and variably controls the welding heating time t1 in a range of 3 seconds to 5 seconds for each welding heat wire 2202 such that a welding heating temperature becomes an appropriate temperature.

Next, after the welding heating time t1 has elapsed, the heating control unit 90 stops heating the plurality of welding heat wires 2202 by turning off the energized state of the plurality of welding heating units 2202A, and cools the plurality of welding heat wires 2202 by setting a post-welding cooling time as t2 (S3). The post-welding cooling time t2 is, for example, about 3 seconds to 5 seconds. As a result, the lower-side film F1 and the upper-side film F2 are reliably welded to each other without being melt-cut. In this case, the welded portion of the wrap film is slightly shifted toward a portion close to the hand having strong tension. As a result, a melt-cut portion of the wrap film to be described later is located at an outer side of the welded portion with respect to the contour of the hand.

Next, after the post-welding cooling time t2 has elapsed, the heating control unit 90 brings the plurality of melt-cutting heating units 2201A into an energized state, thereby heating the plurality of melt-cutting heat wires 2201 by setting a melt-cutting heating time thereof as a t3 time (S4). The melt-cutting heating time t3 is, for example, about 3 seconds to 5 seconds. An appropriate heating temperature of the melt-cutting heat wire 2201 is, for example, about 130°C to 200°C. In this case, the heating control unit 90 detects a heating temperature from the heating temperature detection unit 2203A including the thermistor 2203 adjacent to the melt-cutting heat wire 2201, and variably controls the melt-cutting heating time t3 in a range of 3 seconds to 5 seconds for each melt-cutting heat wire 2201 such that a melt-cutting heating temperature becomes an appropriate temperature. As a result, a portion where the lower-side film F1 and the upper-side film F2 are bonded along the contour of the hand including the outer side of the welded portion are melt-cut while being welded, the lower-side film F1 and the upper-side film F2 are adhered to entire front and rear surfaces of the hand without a gap, and an unnecessary portion of the wrap film on the outer side of the hand is cut off. In the present embodiment, time is divided into the welding heating time t1, the post-welding cooling time t2, and the melt-cutting heating time t3, but the present invention is not limited thereto, and the post-welding cooling time t2 may be omitted, or the welding heating time t1 and the post-welding cooling time t2 may be omitted and welding to melt-cutting may be performed within the melt-cutting heating time t3.

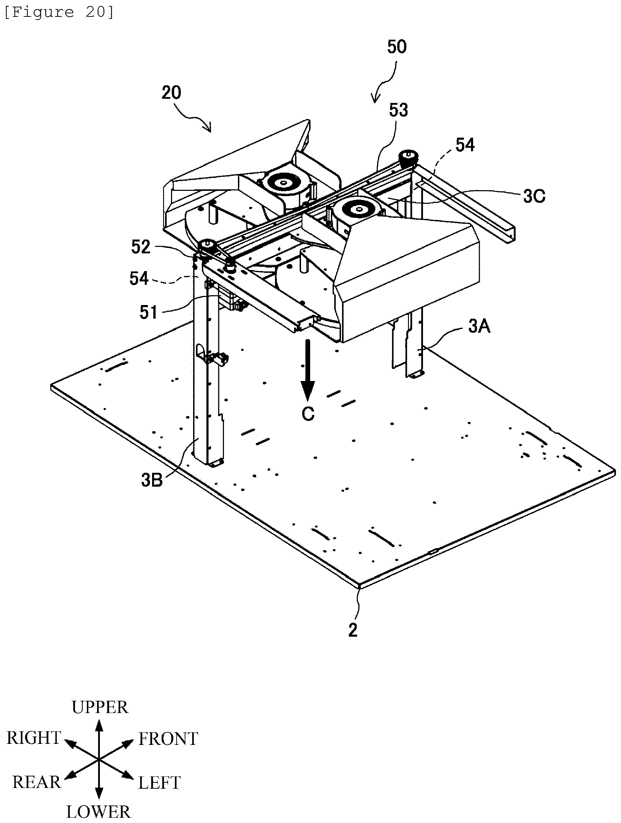

Figure 20 is a perspective view illustrating the up and down drive mechanism 50. As illustrated in Figure 20, the up and down drive mechanism 50 includes a drive motor 51, a drive belt mechanism 52, an interlocking belt mechanism 53, and a ball screw feeding mechanism 54. The drive motor 51 transmits a rotational force to the drive belt mechanism 52 via a reduction gear (not illustrated) or the like. The drive belt mechanism 52 includes a drive gear and a drive belt, and transmits the rotational force to the interlocking belt mechanism 53. The interlocking belt mechanism 53 includes a first driven gear, a second driven gear, and an interlocking belt, and transmits the rotational force to the ball screw feeding mechanism 54. The ball screw feeding mechanism 54 includes a screw shaft (not illustrated) rotated by the rotational force from the interlocking belt mechanism 53 and a ball screw nut (not illustrated) connected to the screw shaft, and moves the movable beam 3C in the up-down direction integrally with the ball screw nut in accordance with rotation of the screw shaft by fixing the ball screw nut to the movable beam 3C. Such an up and down drive mechanism 50 moves the pressure welding unit 20 in the up-down direction together with the movable beam 3C. Although not particularly described in detail, the film conveying mechanism 60 is implemented to form the lower-side film F1 and the upper-side film F2 by drawing out the wrap film from the roll R as illustrated in Figure 3.

Next, operation of the human body wrapping device 1 will be described.

First, in preparation for using the human body wrapping device 1, as illustrated in Figure 3, by the film conveying mechanism 60, the lower-side film F1 is brought into a stretched state directly above the stationary unit 10, and the upper-side film F2 is brought into a stretched state below the pressure welding unit 20 with a certain vertical distance from the lower-side film F1.

Thereafter, in the human body wrapping device 1, both hands are placed in the frame-shaped portions 13A and 13B of the stationary unit 10. In this case, both hands are placed in the frame-shaped portions 13A and 13B in a state where the lower-side film F1 is sandwiched between the stationary unit 10 and both hands.

Thereafter, in the human body wrapping device 1, the pressure welding unit 20 is moved downward as indicated by an arrow C in Figure 20. As a result, the contour portions 132 of the frame-shaped portions 13A and 13B and the bonding portions 222 of the frame-shaped portions 22A and 22B abut against each other while remaining a state where the upper-side film F2 and both hands are sandwiched between the stationary unit 10 and the pressure welding unit 20. In this case, the upper-side film F2 is also brought into close contact with both hands placed in the stationary unit 10 while maintaining a certain degree of pulled state without being twisted or bent. As a result, the lower-side film F1 and the upper-side film F2 closely adhere to both the front and back sides (palm side and back side of the hand) of both hands positioned between the frame-shaped portions 13A and 13B of the stationary unit 10 and the frame-shaped portions 22A and 22B of the pressure welding unit 20. Then, while the lower-side film F1 and the upper-side film F2 are in close contact with both hands, the lower-side film F1 and the upper-side film F2 are in close contact with each other even at portions where the contour portions 132 of the frame-shaped portions 13A and 13B and the bonding portions 222 of the frame-shaped portions 22A and 22B abut against each other.

Next, in the human body wrapping device 1, the lower-side film F1 and the upper-side film F2 are welded and melt-cut by heating the welding heat wire 2202 and the melt-cutting heat wire 2201 along the portions where the contour portions 132 of the frame-shaped portions 13A and 13B and the bonding portions 222 of the frame-shaped portions 22A and 22B abut against each other. As a result, the lower-side film F1 and the upper-side film F2 in close contact with both hands are separated into hand shapes. Thereafter, the pressure welding unit 20 is moved upward, and both hands are detached from the stationary unit 10. As a result, the unnecessary portions of the lower-side film F1 and the upper-side film F2 are cut off from the hands in a state where the wrap films are sealed on both the front and back sides of both hands.

According to such a human body wrapping device 1 of the present embodiment, since the bonding portion along the contour of the hand is divided into a plurality of linear portions, and a plurality of welding heat wires 2202 and melt-cutting heat wires 2201 provided for each of the linear portions are individually controlled to have appropriate heating temperatures, even when the contour of the hand has a complicated shape, two films of the lower-side film F1 and the upper-side film F2 can be appropriately and sufficiently welded and melt-cut for each linear portion along the contour, and thus a sufficient welding margin can be continuously formed along the contour of the hand without partial disconnection.

In addition, it is possible to individually form a portion where the two films of the lower-side film F1 and the upper-side film F2 are melt-cut together while being welded by heating the melt-cutting heat wire 2201 and a portion where the two films of the lower-side film F1 and the upper-side film F2 are welded together by heating the welding heat wire 2202.

In addition, regarding a portion between fingers or a portion close to the wrist where the degree of welding tends to be weak because the tension of the two films of the lower-side film F1 and the upper-side film F2 is partially and relatively high, since the welding margin can be formed by heating the welding heat wire 2202, the welding can be reliably performed.

In addition, the welding can be reliably performed by cooling the bonding portion of the lower-side film F1 and the upper-side film F2 bonded at the portion between the fingers or the portion close to the wrist after heating the welding heat wire 2202, and thereafter, the unnecessary portions of the two films can be reliably melt-cut and cut off by heating the melt-cutting heat wire 2201.

The present invention is not limited to the above embodiment.

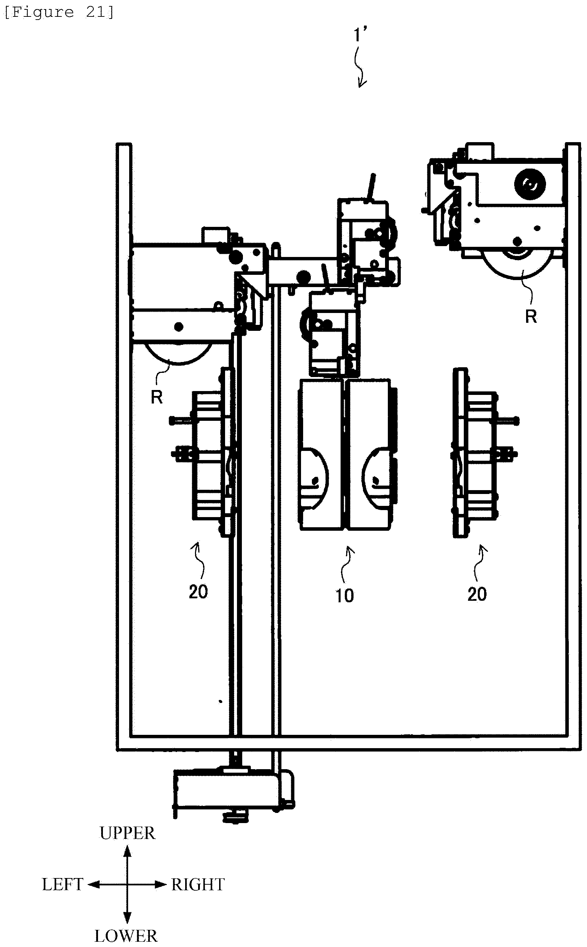

In the above embodiment, the lower-side film F1 and the upper-side film F2 of the wrap film are conveyed along palms of hand and backs of hand of both hands arranged horizontally, but for example, in a human body wrapping device 1' according to another embodiment, as illustrated in Figure 21, the stationary unit 10 and the pressure welding unit 20 may be vertically arranged along a vertical direction so as to be in a posture in which both hands are directed forward and the palms of hand are aligned with each other. In this case, a pair of left and right stationary units 10 and a pair of left and right pressure welding units 20 are provided, and a first region and a second region of a wrap film are formed between the stationary unit 10 and the pressure welding unit 20 on each of the left and right sides with a distance therebetween. Even with such a human body wrapping device 1', it is possible to obtain the same effect as that of the human body wrapping device 1 according to the above-described embodiment.

A target portion of the human body with which the wrap film is brought into close contact is not limited to the hand, and may be, for example, a foot or an entire body.

### Reference Signs List

1, 1' human body wrapping device
10 stationary unit
13A, 13B frame-shaped portion
20 pressure welding unit
22A, 22B frame-shaped portion
220 plane portion
2201 melt-cutting heat wire (heating unit)
2202 welding heat wire (heating unit)
2203 thermistor
221 hand shape portion
222 bonding portion
223 opening
60 film conveying mechanism
90 heating control unit (heating controller)
F1 lower-side film (first film)
F2 upper-side film (second film)

## Claims

1. A human body wrapping device for causing a first film and a second film to adhere to a part of a human body as a target portion, comprising:
a bonding unit for bonding the first film and the second film along a contour of the target portion in a state where the target portion is disposed between the first film and the second film;
a heating unit for heating the first film and the second film in a state where the first film and the second film are bonded to each other in the bonding unit; and
a heating controller for controlling the heating unit,
wherein the bonding unit is divided into a plurality of linear portions,
wherein the heating unit includes a plurality of heat wires provided for each of the plurality of linear portions, and
wherein the heating controller individually controls a heating temperature for each of the plurality of heat wires.

2. The human body wrapping device according to Claim 1, wherein the plurality of heat wires include a melt-cutting heat wire for melt-cutting unnecessary portions of the first film and the second film by heating, and a welding heat wire for welding the first film and the second film to each other by heating.

3. The human body wrapping device according to Claim 2, wherein the welding heat wire is provided in a linear portion where tension of the first film and the second film is relatively high among the plurality of linear portions.

4. The human body wrapping device according to Claim 2 or 3, wherein the heating controller heats the welding heat wire, and heats the melt-cutting heat wire after a predetermined cooling time.
